(19) Europäisches Patentamt
European Patent Office
Office européen des brevets

(11) **EP 1 578 647 B1**

(12) **EUROPEAN PATENT SPECIFICATION**

(45) Date of publication and mention
of the grant of the patent:
**11.07.2007 Bulletin 2007/28**

(51) Int Cl.:
***B60R 21/34*** *(2006.01)*

(21) Application number: **03813998.6**

(22) Date of filing: **26.11.2003**

(86) International application number:
**PCT/SE2003/001824**

(87) International publication number:
**WO 2004/058545 (15.07.2004 Gazette 2004/29)**

(54) **AN IMPACT DETECTOR**

AUFPRALLDETEKTOR

DETECTEUR D'IMPACT

(84) Designated Contracting States:
**AT BE BG CH CY CZ DE DK EE ES FI FR GB GR HU IE IT LI LU MC NL PT RO SE SI SK TR**

(30) Priority: **31.12.2002 GB 0230341**

(43) Date of publication of application:
**28.09.2005 Bulletin 2005/39**

(73) Proprietor: **AUTOLIV DEVELOPMENT AB**
**447 83 Vargarda (SE)**

(72) Inventors:
• **MATHEVON, Vincent**
**S-591 95 Motala (SE)**
• **ERIKSSON, Patrik**
**S-591 72 Motala (SE)**
• **BILLOW, Ulf**
**S-591 54 Sturefors (SE)**
• **ODENMO, Jan**
**S-352 55 Växjo (SE)**
• **KOZYREFF, Michel**
**F-76240 Bonsecours (FR)**

(74) Representative: **Parry, Simon James**
**Forrester & Boehmert,**
**Pettenkoferstrasse 20-22**
**80336 München (DE)**

(56) References cited:
WO-A1-97/18108          WO-A1-02/098715
WO-A1-03/082639         DE-A1- 10 039 755
DE-A1- 10 045 698       DE-A1- 10 123 840
US-A1- 2002 033 755     US-A1- 2002 180 596

**Description**

**THE PRESENT INVENTION** relates to an impact detector, and more particularly relates to an impact detector adapted to be mounted on a motor vehicle to detect a particular kind of impact, such as, for example, an impact with a pedestrian.

It has been proposed to provide motor vehicles, such as motor cars, with safety devices intended to provide a degree of protection to a pedestrian that may be struck by the vehicle. One form of such a safety device includes an inflatable element having portions which extend up the "A"-Posts of the vehicle, to prevent the head of the pedestrian from being injured due to an impact with an "A"-Post of the vehicle. Another form of such a safety device lifts the rear part of the hood or bonnet of the vehicle, to distance the main region of the hood or bonnet from the underlying engine, thus enabling the hood or bonnet to deform if struck by the head of a pedestrian, consequently decreasing the risk of injury.

There is, therefore, a need for an impact detector which will detect an impact with a pedestrian to generate a control signal for such a safety device.

Prior proposed impact detectors have used different kinds of sensors in the bumper of a motor vehicle, such as accelerometers, deformation sensors and force sensors. An output signal to activate a safety device to protect a pedestrian is generated if signals from the sensors are above or below predetermined threshold values.

In order to be able to discriminate an impact with a pedestrian from an impact with a lighter object, such as a bird, the sensor should ideally provide the output signal, in an accident situation in which an object is being struck, only in dependence upon a characteristic of the object being struck, such as the mass of that object, together possibly with other known and measurable parameters, such as the speed of the vehicle.

US 2002/0033755 describes an impact detector for detecting and evaluating an impact and generating an output signal, the detector having at least one sensor to sense a variable that is dependent upon the nature of an impact, the sensor being mounted on or within an element adapted to be mounted on the front of a motor vehicle, the element having a deformable part with a predetermined stiffness, positioned to be deformed during an impact, the detector incorporating an evaluator to evaluate the output of the sensor and to generate the output signal when a predetermined threshold is exceeded.

The present invention seeks to provide an improved impact detector.

According to the present invention, there is provided an impact detector for detecting and evaluating an impact and generating an output signal, the detector having at least one sensor to sense a variable that is dependent upon the nature of an impact, the sensor being mounted on or within an element adapted to be mounted on the front of a motor vehicle, the element having a deformable part with a predetermined stiffness, positioned to be deformed during an impact, the stiffness varying in accordance with at least one parameter, the detector incorporating an arrangement to measure the said at least one parameter and an evaluator to evaluate the output of the sensor in combination with the degree of stiffness corresponding to the said at least one parameter as measured, and to generate the output signal when a predetermined threshold is exceeded.

Preferably the sensor is a force sensor.

Advantageously the sensor comprises at least one accelerometer mounted to the element, the element being provided with yieldable supports by means of which the element may be mounted on the front of a motor vehicle.

Conveniently the sensor comprises two said accelerometers, and wherein the element is provided with two said yieldable supports, each accelerometer being located on or in or adjacent a respective yieldable support.

Preferably the sensor comprises an elongate sensor mounted within the element, the sensor being located to have a force applied thereto when the deformable part of the element is deformed.

Advantageously the sensor is a piezo-electric cable.

Conveniently there are a plurality of piezo-electric cables.

Preferably the piezo-electric cables partially overlap each other.

Advantageously the sensor is at least one pressure tube.

Conveniently there are a plurality of pressure tubes.

Preferably the pressure tubes partially overlap each other.

Advantageously each pressure tube is of non-uniform cross-section, having part of the cross-section of substantial vertical extent and part of the cross-section of lesser vertical extent. In a practical embodiment, to be mounted on the front part of a motor vehicle, the part of substantial vertical extent will be located forwardly of the part of lesser vertical extent.

Conveniently each pressure tube is provided with a vent hole.

Preferably the deformable part of the element is formed of a deformable foam material.

Conveniently the or each pressure tube is formed as a channel within the foam material.

Advantageously the element incorporates a substantially rigid beam, the foam being mounted to the beam.

Conveniently the element is provided with at least one contact sensor, the detector including a logic arrangement so that said output signal is generated only when an output is provided by the evaluator and an output is provided by the said contact sensor.

Advantageously a plurality of contact sensor elements are provided, the logic arrangement being such that said output signal is generated when an output signal is provided by at least one of the contact sensor elements.

Preferably a said at least one parameter comprises the thickness of the deformable part of the element, the deformable part of the element being of non-uniform thickness. -

Advantageously the arrangement to measure said at least one parameter comprises an arrangement to measure the point of impact and to determine the thickness of the said element in accordance with the position of the point of impact.

Conveniently the means to measure the position of impact comprise an arrangement to compare the accelerations imparted to the two accelerometers, and to perform an algorithm.

Preferably an analyser is provided to analyse signals from different elongate contact sensors to determine which contact sensor or combination of contact sensors is providing the signal, to determine the point of impact.

Advantageously an analyser is provided to analyse signals from different contact sensor elements to determine which contact sensor element or combination of sensor elements is providing a signal, to determine the position of the point of impact.

Conveniently said at least one parameter includes temperature and wherein at least one temperature sensor is provided to sense temperature.

In one embodiment in which the detector incorporates a piezo-cable the temperature sensor is an analyser to analyse the capacitance across electrodes of the piezo-cable.

Preferably a plurality of temperature sensors are provided.

Advantageously the identity of the temperature sensor or temperature sensors providing an output signal used by the evaluator is determined by the means that determine the position of the point of impact.

Conveniently the evaluator is configured additionally to evaluate a signal indicative of vehicle speed before the impact, and to generate the output signal only when the vehicle speed meets at least one criterion.

Advantageously the evaluator is configured to generate said output signal only when the vehicle speed is in excess of a first relatively low threshold and below a second relatively high threshold.

Preferably the first threshold is 20 km per hour and the second threshold is 60 km per hour.

A preferred embodiment of the invention also provides a detector as described above when mounted to the chassis of a vehicle, the stiffness of the part of the element between the sensor and the chassis being less than $^1/_{10}$ of the total stiffness of the element.

Advantageously the detector is configured to receive a signal from a central accelerometer assembly indicative of the total deceleration applied to a vehicle on which the detector is mounted, to inhibit generation of said output signal if the said acceleration fulfils a predetermined criteria.

A further preferred embodiment of the invention provides a detector as described above associated with a pedestrian protection device so that the said output signal will activate the pedestrian protection device.

In order that the invention may be more readily understood, and so that further features thereof may be appreciated, the invention will now be described by way of example with reference to the accompanying drawings in which:

FIGURE 1 is a diagrammatic view of a vehicle bumper provided with sensors in the form of accelerometers,

FIGURE 2 is a view of a vehicle bumper provided with a force sensor extending along the whole width of the bumper,

FIGURE 3 is a graphical figure provided for purposes of explanation,

FIGURE 4 is a further graphical figure provided for purposes of explanation,

FIGURE 5 is yet another graphical figure provided for purposes of explanation,

FIGURE 6 is a horizontal sectional view of a bumper incorporating two pressure tubes,

FIGURE 7 is a sectional view taken on the line VII-VII of Figure 6,

FIGURE 8 is a further diagrammatic view of a vehicle bumper, and

FIGURE 9 is a diagrammatic view of a vehicle bumper incorporated within a block diagram.

The stiffness of a member such as a vehicle bumper *k* defined as

$$k = F/s$$

where $F$ is the force applied to a particular point or region of the bumper during an impact situation, and $s$ is the actual displacement of the impact point or region. In a situation where there is an impact with an object having a mass $m$, with the speed of the vehicle on which the bumper is mounted immediately before the impact being $v$ then, assuming that $k$ is a constant,

$$s = v . \sqrt{\frac{m}{k}} . \sin(\sqrt{\frac{k}{m}} . t)$$

If the deformation is not elastic (which might be considered to be normal in the case of a vehicle accident), then this equation is valid for a period of time t where

$$t \leq \frac{\pi}{2} \sqrt{\frac{m}{k}}$$

Subsequently

$$s = s_{max} = v . \sqrt{\frac{m}{k}}$$

If an accelerometer is used, the expression for acceleration is the second derivative of $s$:

$$a = v . \sqrt{\frac{k.}{m.}} \ \sin(\sqrt{\frac{k}{m}} . t)$$

The force $F = k.s$ and thus

$$F(t) = v. \sqrt{k.m} . \sin(\sqrt{\frac{k}{m}} .t \ ) \text{ for}$$

$$t \leq \frac{\pi}{2} \sqrt{\frac{m}{k}}$$

and
thereafter $F(t) = 0.$

The mathematical analysis set out above only refers to the actual point of impact. If a sensor is provided which is located behind the point of impact, the signal is reduced with a factor equal to the quotient between the total stiffness and the stiffness behind the sensor, that is to say between the sensor and the chassis of a vehicle on which the member is mounted. To gain a high signal the stiffness in front of the sensor should be high and the stiffness behind the sensor should be low. However, to minimise the risk of injuring a pedestrian, the stiffness in front should be low. A good compromise can be achieved if the stiffness behind the sensor is less than $1/_{10}$ of the total stiffness of the vehicle bumper.

Consequently it is to be understood that in the situation considered above, if the vehicle speed $v$ immediately before the impact is known, and if the stiffness $k$ for the vehicle bumper in the region where the impact occurs is known, it is possible to calculate $m$, the mass of the object with which the impact is occurring.

Of course, once the mass $m$ of the object has been determined, that value can be used in an algorithm to determine whether or not the control signal for a safety device to protect a pedestrian should, or should not, be generated. The algorithm may, of course, rely on other parameters, such as the absolute vehicle speed, bearing in mind that a safety device to provide protection for a pedestrian may be considered to be effective only if the speed of impact with the pedestrian is greater than 20 km per hour, and less than 60 km per hour. At vehicle speeds less than 20 km per hour, or greater than 60 km per hour, most present-day safety devices intended to provide protection for pedestrians are thought to have no tangible beneficial effect.

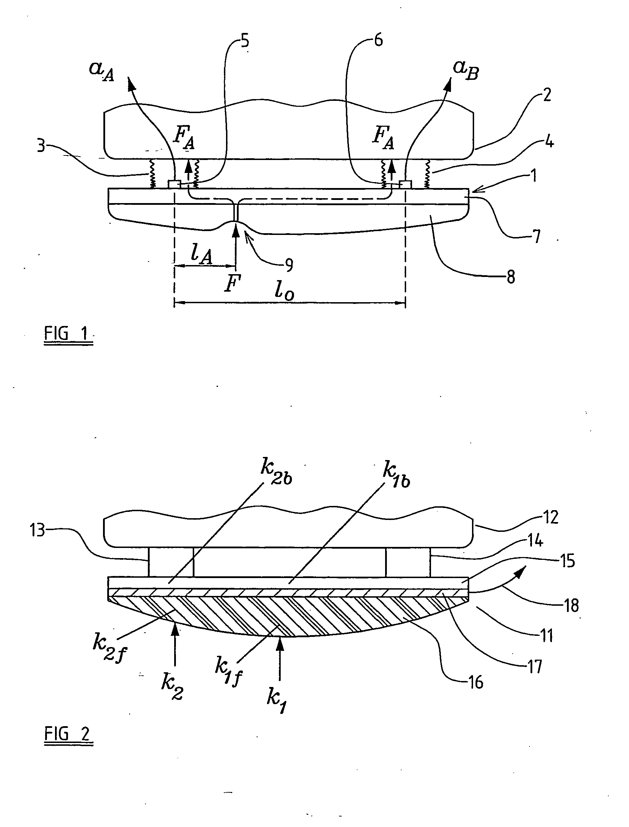

Referring initially to Figure 1 of the accompanying drawings, a bumper (or fender)assembly 1 is mounted to the front part of a motor vehicle 2, such as a motor car, by two yieldable supports 3, 4 which are each located adjacent a respective end of the bumper. Each support 3, 4 may be in the form of a generally tubular housing formed of material having a thickness such that the housing will collapse or yield during a typical impact situation involving a pedestrian. Each support may thus be considered to be a "crash box".

Mounted on the rear part of the bumper 1 are two accelerometers 5, 6. The accelerometer 5 is mounted within the "crash box" 3 and the accelerometer 6 is mounted within the "crash box" 4, so that the respective crash boxes can provide a degree of protection for the accelerometers. However, the accelerometers may be positioned on the crash boxes or anywhere adjacent the crash boxes, possibly within part of the bumper assembly itself. In the described embodiment each accelerometer is mounted to the rear face of a relatively stiff beam 7 which forms part of the bumper 1. The front face of the beam 7 is provided with a yieldable covering 8 constituted, in the illustrated arrangement, by a "foam" block which is secured to the front face of the beam 7. The foam is a yieldable foam, the foam being of a uniform construction and thus having a known degree of "stiffness".

The foam does not have a uniform thickness, however, and thus the absolute stiffness of the foam at any particular point is dependent upon the thickness of the foam at that particular point.

The stiffness of the foam at any particular position or point could be calculated from design data, and the calculated stiffness could be stored in a memory in the form of a "look-up table". Thus, as will become clear from the following description, it would be possible to calculate the position of the point of impact and then to determine the relevant stiffness, from the "look-up" table for that position.

Should an impact with a pedestrian occur, such that a force, as indicated by the arrow F is applied to a specific point, such as point 9 on the bumper, then if the distance between the two accelerometers is $l_0$ and the distance between the point of impact 9 and the first accelerometer 5 is $l_A$, it will be found that the accelerometer 5 will provide an output signal $a_A$ and the second accelerometer 6 will provide an output signal $a_B$, the output signal being representative of a force $F_A$ applied to the first accelerometer 5, and a force $F_B$ applied to the second accelerometer 6 where $F = F_A + F_B$. It is possible to determine the precise location of the point 9 relative to the accelerometers 5 and 6 because

$$l_A \approx \frac{l_0 \cdot a_B}{a_A + a_B}$$

Having determined the precise position 9 at which the impact occurred, by analysing the output signals $a_A$ and $a_B$ from the accelerometers 5 and 6, it is possible to determine the stiffness of the foam 8 at that position, using stored data about the bumper, and consequently, relying on the mathematical analysis set out above, it is possible to determine the mass of the impacting object. Thus the algorithm used relies on the stiffness $k$ of the foam, and on the stiffness of the "crash boxes" 3, 4. Thus the stiffness of elements in front of and behind the sensors are utilised.

Figure 2 illustrates a bumper 11 mounted to the front of the vehicle 12 by means of yieldable supports, or "crash boxes" 13, 14 of the type described above, located adjacent the opposed ends of the bumper 11. The bumper includes a substantially rigid beam 15 which extends between the supports 13 and 14, and, mounted to the front of the beam, is a foam element 16. Between the foam element and the beam is a sensor element 17, the sensor element either being in the form of a pressure tube or being in the form of a piezo-cable. The sensor is responsive to the total force applied to the bumper, regardless of the precise point at which the force is applied.

A pressure tube is a tube having yieldable walls and containing a gas or liquid. The gas or liquid is in communication with a pressure sensor. If a force is applied to the tube, deforming the tube, the pressure of the gas or liquid rises, and this rise in pressure is sensed by the pressure sensor.

A piezo-cable is an elongate cable having an elongate piezo-electric material between two elongate electrodes. A piezo-electric material is a material which, when compressed, generates an electric potential across opposed faces thereof. Thus the cable is such that if a force is applied to the cable, a potential is created, and that potential may be sensed. The piezo-electric material utilises a dielectric material with good piezo-electric properties.

In some forms of piezo-cable, the piezo electric material is divided up into a plurality of small segments, there being individual electrodes associated with each segment, such that an output generated by the piezo-cable automatically indicates the precise point at which a force is applied to the cable. Thus such a cable may immediately identify a point of impact. Where, however, a pressure tube is used, the pressure tube could be divided into separate segments, which might overlap, or, alternatively a separate position sensor could be utilised to determine the position of the impact since, in the illustrated embodiment, the foam 16 is not of uniform thickness, and thus does not have a uniform overall stiffness characteristic and, as in the previously described embodiment, it will be appropriate to determine the position of impact so that the relevant stiffness may be determined for the point of impact from the stored information relating to the bumper.

If the effective stiffness $k_1$ at a substantially central point of the bumper of Figure 2 (where the foam is quite thick) is considered, the effective stiffness $k_1$ relies on the stiffness of the foam $k_{1f}$ at the relevant substantially central point and also the stiffness $k_{1b}$ of the beam 15 at the relevant substantially central point, and may be expressed as:

$$k_1 = \frac{k_{1f} \cdot k_{1b}}{k_{1f} + k_{1b}}$$

Because the beam is "softer" at a position between the supports 13, 14, $k_{1b}$, the effective stiffness of the beam at a point between the supports is less than $k_{2b}$ the effective stiffness of the beam adjacent one of the supports 13. Also it is to be noted that $k_{1f}$ is much less than $k_{2f}$ a point adjacent a support 13, because the foam is "softer" where it is thicker.

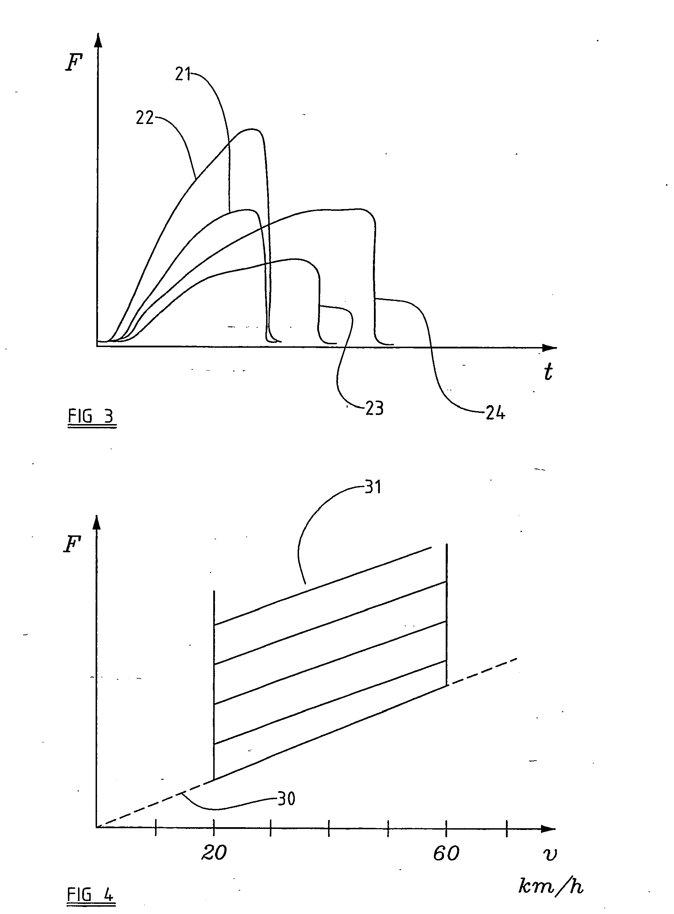

Turning now to Figure 3, various plots of detected force as compared with time are shown for different combinations *of m, k* and *v*.

As has been mentioned above, for designs and materials which have a constant stiffness ($k = F/s$):

$$F(t) = v \ \sqrt{k.m.} \ sin\left( \sqrt{\frac{k}{m}} \cdot t \right)$$

$$\text{for} \quad t < \frac{\pi}{2}\sqrt{\frac{m}{k}}$$

The first line plotted in Figure 3, namely line 21, shows a typical force against time line for an impact with an object having a mass $m_1$ with a vehicle velocity of $v_1$, the central part of the beam of Figure 2, where the effective stiffness is $k_1$. The line rises gradually towards a maximum and then drops suddenly at the end of the impact situation. Line 22 illustrates a similar situation to that of line 21, but the velocity $v_2$ has been increased. It can be seen that the line has a steeper initial path, rising to a greater maximum force, but terminates at substantially the same instant as line 21.

Line 23 illustrates the force experienced at the vehicle speed $v_1$ for an impact with an object having a mass $m_1$, in a region of effective stiffness $k_2$ as shown in Figure 2, adjacent a support 13 for the bumper 11. Again the overall shape of the line is similar to that described above, with the line rising towards a maximum force and then terminating abruptly. However, the maximum force is less than that for lines 21 or 22, but the time at which the force drops is later, as compared with the commencement of the force.

Finally, line 24 illustrates the force experienced during an impact at a vehicle speed $v_1$ with an object having a mass $m_2$ where $m_2$ is greater than $m_1$, again at a region where an effective stiffness $k_2$ is experienced. The line 24 rises gradually to a maximum and then terminates abruptly. The maximum, however, is greater than the maximum seen in line 23, and the termination of the force occurs at a later instant than it does in line 23.

Turning now to Figure 4, it is possible to use a set of criteria for generation of the control signal for the safety device which include the mass of the struck object and the speed of the vehicle.

Figure 4 is a graphical figure indicating a plot between applied force and absolute vehicle speed. As mentioned above, it may be appropriate to select a predetermined range of vehicle speeds so that the control signal is only generated if the vehicle speed, before the impact, is within the selected range. In Figure 4 the range of 20 km to 60 km per hour has been selected, but this is an arbitrary selection. If an impact is detected while the vehicle is travelling within the speed range the control signal should only be generated if the force F exceeds a threshold.

$$F_1 \geq v. \ \sqrt{k.m_1}$$

where $m_1$ is the lower limit of the mass of the leg of a pedestrian.

Consequently, it is possible to draw a line having a slope $\dfrac{dF_1}{dv} = \sqrt{k.m_1}$ and such a line has been plotted on the graph as line 30. Thus, if the mass of an object struck during any particular impact is such that a force is generated which is found in the area of 31 located above the line 30, then the output signal should be generated.

If a foam, or equivalent material is used, at least a part of the path from the position of the point of impact to the chassis of the vehicle will have a stiffness $k$ which will be dependent on temperature as normally foam gets softer, with a lower $k$ value at the temperature rises.

For many materials or designs the stiffness $k$ is not independent of $s, a$ or $F$. The stiffness $k$ could also be dependent on $v$.

If, for example $F = f_1(k, v, m)$ where $k = f_2(F, v, T)$, then F could be written as a new function of $f_3$.

$F = f_3(T, v, m)$ where $f_3$ is independent of $F$. For the sake of simplicity it is assumed that for this analysis k is independent of the position of impact.

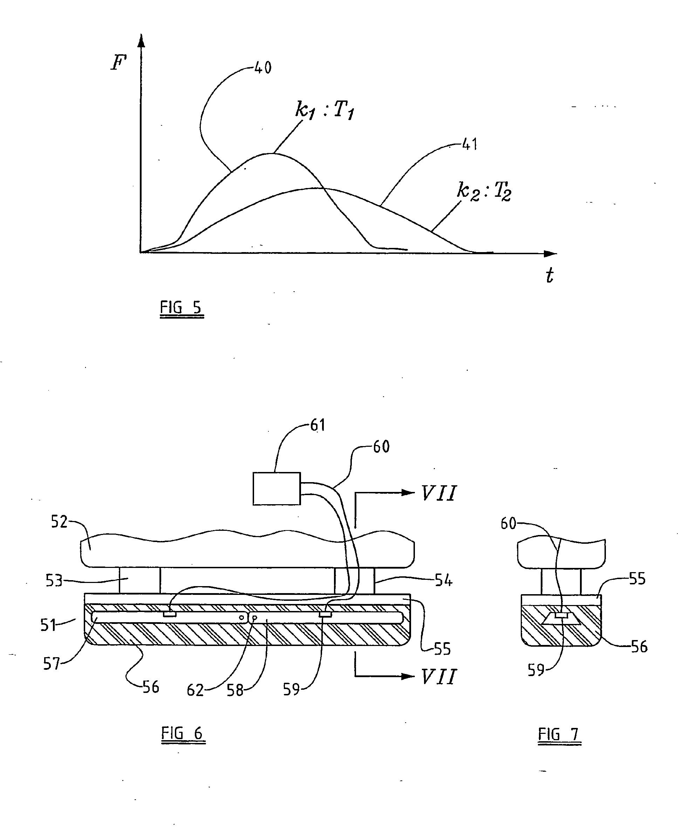

Figure 5 shows different plots of $F(t)$ for foam used in bumpers for different T and thus different k but with the same values for $v$ and $m$.

The first line 40 appearing in Figure 5 illustrates the effect with a relatively low temperature $T1$ and thus with a relatively high stiffness $k_1$. The total time taken for completion of the illustrated cycle is relatively short. For a higher temperature $T2$ and thus a lower foam stiffness $k_2$, as shown at line 41, the total time taken is much longer but the maximum force is lower than for the line 40. The integral of the line 40 (i.e. the area under the curve) is the same as that for the line 41.

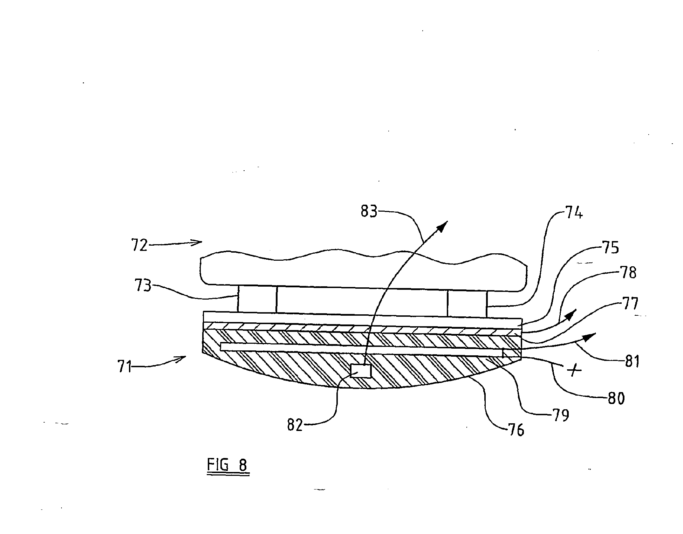

Referring now to Figures 6 and 7 of the accompanying drawings, a further bumper 51 is illustrated secured to the chassis 52 of a motor vehicle by means of two yieldable supports which may be in the form of crash boxes 53, 54. The bumper is provided with a relatively stiff rear beam 55, carrying, on its front face, a foam element 56. The foam element 56 of the illustrated embodiment has formed within it a channel constituting two adjacent pressure tubes 57, 58. The pressure tubes are identical and thus only the pressure tube 58 will be described. The pressure tube 58 comprises an elongate tube, there being a pressure sensor 59 within the tube providing an output on an output lead 60 to a processor 61. Each tube may be a channel formed in the foam material. The walls of the channel may be sealed and such sealing will be necessary if the foam is an open cell foam. The tube is provided with a vent hole 61 to atmosphere so that the tube normally contains air at atmospheric pressure. As can be seen most clearly from Figure 7, the interior of the tube does not have a uniform cross-section, but instead has a "trapezoidal" cross-section, the cross-section having a substantial dimension towards the very front of the bumper, and having a reducing section towards the rear of the bumper. The reason for this is that if such a tube is compressed, the change in volume, in the part of the tube which has the greater "height", is large relative to the total volume of the chamber.

It is preferred to use two or more individual tubes, rather than one single tube, because the effective reduction of volume, as compared with the total volume, is much greater for a smaller tube extending across only part of the length of the bumper, than for a longer tube extending across the whole length of the bumper in any specific impact situation. If a plurality of tubes are used by "overlapping" the tubes, it may be possible to determine the point of impact by determining which tubes have been subjected to an increase in pressure, thus enabling the effect of the thickness of the foam at the point of impact to be taken into account. A similar effect may be achieved by "overlapping" a plurality of piezo-cables of the type discussed above.

It is thought that in preferred embodiments of the present invention, it will be beneficial to have an independent "arming" arrangement which must be actuated before the control signal to deploy the safety device can be generated. Such an arrangement will minimise the risk of the control signal being generated in an inappropriate situation due, for example, to a single spurious electric signal.

Figure 8 illustrates a bumper 71 mounted to the chassis 72 of the motor vehicle by yieldable supports 73, 74 which may be in the form of "crash boxes" positioned adjacent the ends of the bumper 71. The bumper 71 incorporates a beam 75. On the front of the beam 75 is a body 76 formed of a yieldable foam. Incorporated within the foam body is a force sensor 77 in the form of one or more pressure tubes, or in the form of one or more piezo-cables. The sensor 77 provides an output signal shown schematically as the output 78.

In front of the sensor 77 is a totally separate and independent contact sensor 79. The contact sensor 79 may simply comprise two electrically conductive foils which initially are spaced a very short distance apart within the foam. Should any force be applied to the foam 76, the foils will be brought into electrical contact, thus effectively "shorting out", electric leads 80, 81 which are connected to the two foils. Other forms of contact sensor may be utilised, and it will be understood that before the control signal may be generated, firstly the contact sensor 79 must sense contact and, secondly in the manner described above, it must be determined that the mass of the object with which an impact is occurring meets the appropriate criteria. The contact sensor may include overlapping contact sensor elements to assist in the determining the position of the point of impact, as will be described more fully below.

Reference has been made to relying on the effective stiffness of the material forming a bumper, and the stiffness of the mounts which mount the bumper in position, in calculations to determine the mass of an object striking the bumper. The stiffness of the material forming the bumper may be dependent upon temperature. Thus, in the bumper shown in Figure 8, a temperature sensor 82 is incorporated within the foam body providing an output 83, and the output 83 may be fed to the processor so that in performing any calculations which relate to the stiffness of the foam body, appropriate adjustments may be made in accordance with the actual temperature. However, in an embodiment which incorporates a piezo-cable, as described above, the capacitance between the electrodes of the cable , which varies as a function of temperature, may be measured and analysed to provide a signal representative of temperature.

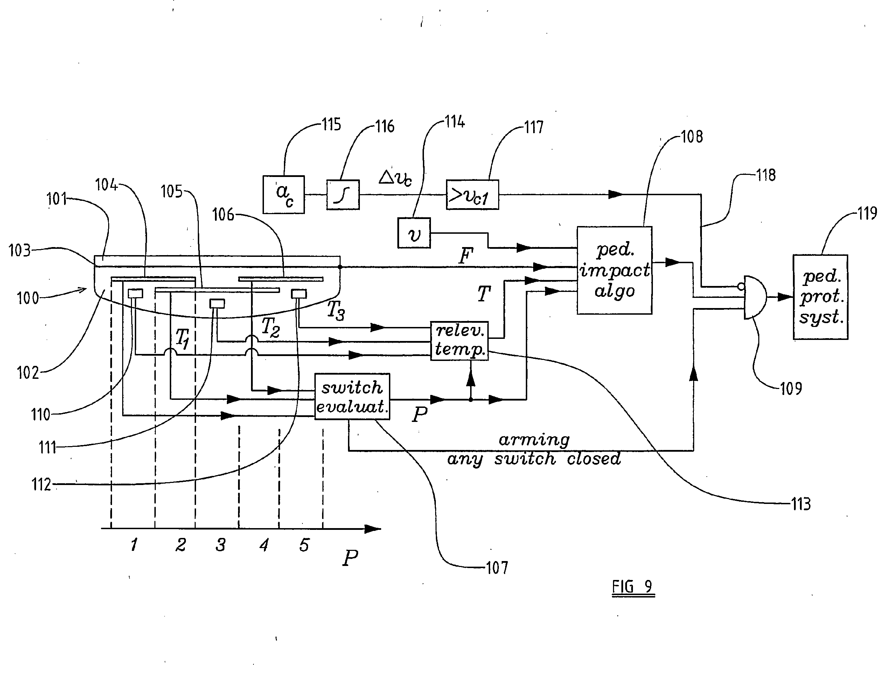

Figure 9 illustrates a complete operative system forming a preferred embodiment of the invention.

Figure 9 shows a bumper 100 which may be mounted on a motor vehicle in the manner discussed above, using two supports in the form of "crash boxes" adjacent the ends of the bumper. The bumper 100 incorporates a relatively rigid beam 101, to the front face of which is mounted a foam body 102. A force sensor 103 is provided between the foam body 102 and the beam 101, which may be in the form of a plurality of pressure tubes, or a piezo-cable. In the embodiment of Figure 9, three elongate contact sensors 104, 105, 106 are provided, which are overlapping. The contact sensors 104, 105, 106 are within the foam body 102, being positioned in front of the force sensor 103. The rearmost contact sensors 104, 106 are spaced-apart, and the forward contact sensor 105 overlaps substantially half of each of the contact sensors 104, 106, and also extends across the space between the contact sensors 104 and 106. This relatively simple arrangement enables five discrete contact zones to be identified, using only three sensors.

As can be seen, if an impact occurs to the very left of the bumper as shown in Figure 9, it is only the contact sensor 104 that will sense contact. If the impact occurs slightly to the right, where the sensor 104 overlaps the sensor 105, both sensors will detect an impact. If the impact occurs even further to the right, only the middle sensor 105 will detect the impact, unless the impact occurs at a point where the sensor 105 overlaps the sensor 106, in which case both the sensors will sense the impact. Finally, should the impact occur at the very right-hand side of the bumper, only the sensor 106 will detect the impact. The sensors 104, 105, 106 are all connected to an evaluation unit 107 which determines which sensor or which combination of sensors have sensed contact, and provides an appropriate output signal indicative of the point where the impact has occurred to a processor 108 which carries out a pedestrian impact algorithm. The processor 108 is configured to determine, from a "look up table" stored in a memory the effective stiffness of the foam in the relevant zone. If any one of the contact sensors senses a contact, then an arming signal is provided to a logic component in the form of an inhibitable "AND gate" 109, which also receives an input from the processor 108.

In the embodiment illustrated a plurality of temperature sensors 110, 111 and 112 are provided within the bumper. The temperature sensors sense the temperature in different regions of the foam body 102. The output signal from the evaluation unit 107 is passed to a temperature selection unit 113 which receives signals from the three temperature sensors 110, 111 and 112. Depending upon the determination as to the point of impact from the evaluation unit 107, the temperature of an appropriate temperature sensor, or of a combination of temperature sensors, is passed, by the temperature selection unit 113 to the processor 108 carrying out the pedestrian impact algorithm. The actual temperature may be used to adjust the selected value of stiffness appropriately.

The processor 108 also receives an input indicating the speed of the vehicle immediately preceding the impact from the vehicle speedometer unit 114.

In the embodiment as shown in Figure 9, a further accelerometer 115 is provided which is mounted on the main chassis of the vehicle, preferably at a central location. The accelerometer 115 is therefore responsive to the total acceleration of the vehicle, and, as will become clearer, this accelerometer is utilised to determine if the vehicle has been involved in an impact with a very heavy object, such as another vehicle, in which case it would be inappropriate to deploy the safety device intended to provide protection for a pedestrian.

The output of the accelerometer 115 is integrated at an integrator 116, to provide a signal representative of

EP 1 578 647 B1

the total velocity change of the vehicle during a predetermined period of time.

$$\int_{t_0}^{t} a_c \, . \, dt$$

The output of the integrator is fed to a discriminator 117. The discriminator is intended to determine whether the change in velocity is such that an impact has occurred with an object which is much heavier than a pedestrian. Should the discriminator 117 determine that the change in velocity exceeds a predetermined threshold, which may indicate that an impact has occurred with an object heavier than a pedestrian, then a signal is generated on lead 118 which inhibits the AND-gate 109, thus preventing the control signal on the output of the AND-gate from being generated.

Instead of calculating the total velocity change a low pass filter could be applied to the acceleration signal, or a "sliding window" mean value may be calculated, this being the mean value, at any instant, over a preceding predetermined period of time.

$$\frac{1}{\Delta t} \int_{t-\Delta t}^{t} a_c \, . \, dt$$

The output of the AND-gate 109 is provided to the safety device in the form of a pedestrian protection system 119.

It is, therefore, to be appreciated that in the event of an impact which causes a force to be applied to part of the bumper 100, initially the force is detected by one or more of the contact detectors 104, 105, 106, which will enable the evaluation unit 107 to determine which area of the bumper has been struck and pass that information to the processor 108, and also to provide an arming signal to the AND-gate 109. Also, the evaluation unit 107 will be able to pass an appropriate signal to the temperature selection unit 113 to enable an appropriate temperature signal to be passed to the processor 108.

The force of the impact will be measured by the force sensor 103 and the appropriate force will be passed to the processor 108. The processor 108 also receives the instantaneous vehicle speed from the speedometer unit 114. Using the techniques described above, the processor unit 108 will be able to determine the mass of the object which has been impacted. Thus the processor 108 acts as an evaluator, to evaluate the output of the sensor, in combination with the determined stiffness of the foam at the point of impact, to calculate the mass of the object involved in the impact. If the mass is above a predetermined threshold, an output signal will be passed to the AND-gate 109. Unless the AND-gate 109 is inhibited by a signal on the line 118, which will only be present if the accelerometer 115, the integrator 116 and the discriminator 117 have determined that an impact has occurred with a very heavy object, such as another vehicle, then the control signal will pass from the AND-gate 109 to the safety arrangement intended to provide protection for a pedestrian will be activated.

From the forgoing it will be clear that a sensor, such as an accelerometer or force sensor mounted at the front of a vehicle could be used for discriminating both lighter objects and heavier objects, but is more suitable for discriminating lighter objects as the sensor might be damaged by an impact with a heavy or very rigid object. It is to be understood that a pedestrian protection device of the type in which the hood or bonnet is lifted, should not be activated in a severe crash as, in such a severe crash situation the hood might penetrate the windscreen. Thus it is desirable for a detector which is an embodiment of the invention to provide the output signal when an impact is sensed, but only if the impact is with an object which has a mass above a predetermined threshold and only if the impact is not part of a severe crash situation.

In the present Specification "comprises" means "includes or consists of" and "comprising" means "including or consisting of".

**Claims**

1. An impact detector for detecting and evaluating an impact and generating an output signal, the detector having at least one sensor (5,6,17,77,79) to sense a variable that is dependent upon the nature of an impact, the sensor

9

(5,6,17,77,79) being mounted on or within an element (1,11,51,71) adapted to be mounted on the front of a motor vehicle (2,12,52,72), the element having a deformable part with a predetermined stiffness, positioned to be deformed during an impact, the stiffness varying in accordance with at least one parameter, the detector incorporating an arrangement to measure the said at least one parameter and an evaluator to evaluate the output of the sensor (5,6,17,77,79) in combination with the degree of stiffness corresponding to the said at least one parameter as measured, and to generate the output signal when a predetermined threshold is exceeded.

2. A detector according to Claim 1 wherein the sensor (5,6,17,77,79) is a force sensor (77).

3. A detector according to Claim 1 wherein the sensor (5,6,17,77,79) comprises at least one accelerometer (5,6) mounted to the element (1,11,51,71), the element being provided with yieldable supports (3,4) by means of which the element may be mounted on the front of a motor vehicle.

4. A detector according to Claim 3 wherein the sensor comprises two said accelerometers (5,6), and wherein the element (1,11,51,71) is provided with two said yieldable supports (3,4), each accelerometer (5,6) being located on or in or adjacent a respective yieldable support (3,4).

5. A detector according to Claim 2 wherein the sensor (5,6,17,77,79) comprises an elongate sensor (17,77,79) mounted within the element, the sensor being located to have a force applied thereto when the deformable part of the element is deformed.

6. A detector according to Claim 5 wherein the sensor (17) is a piezo-electric cable.

7. A detector according to Claim 6 wherein there are a plurality of piezo-electric cables.

8. A detector according to Claim 7 wherein piezo-electric cables partially overlap each other.

9. A detector according to Claim 5 wherein the sensor is at least one pressure tube (57,58).

10. A detector according to Claim 9 wherein there are a plurality of pressure tube (57,58).

11. A detector according to Claim 10 wherein the pressure tubes partially overlap each other.

12. A detector according to any one of Claims 9 to 11 wherein each pressure tube (57,58) is of non-uniform cross-section, having a front part of the cross-section of substantial vertical extent and a rear part of the cross-section of lesser vertical extent.

13. A detector according to any one of Claims 9 to 12 wherein each pressure tube (57,58) is provided with a vent hole (62).

14. A detector according to any one of the preceding Claims wherein the deformable part of the element is formed of a deformable foam (16,56) material.

15. A detector according to Claim 14 as dependent on any one of Claims 9 to 13 wherein the or each pressure tube (57,58) is formed as a channel within the foam material (56).

16. A detector according to Claim 14 wherein the element incorporates a substantially rigid beam (7,15,55,75), the foam being mounted to the beam.

17. A detector according to any one of the preceding Claims wherein the element (71) is provided with at least one contact sensor (79), the detector including a logic arrangement so that said output signal is generated only when an output is provided by the evaluator and an output is provided by the said contact sensor.

18. A detector according to Claim 17 wherein a plurality of contact sensor elements (104,105,106) are provided, the logic arrangement being such that said output signal is generated when an output signal is provided by at least one of the contact sensor elements.

19. A detector according to any one of the preceding Claims wherein a said at least one parameter comprises the thickness of the deformable part (8) of the element (1), the deformable part of the element being of non-uniform thickness.

20. A detector according to Claim 19 wherein the arrangement to measure said at least one parameter comprises an arrangement to measure the position of the point of impact and to determine the thickness of the said element in accordance with the position of the point of impact.

21. A detector according to Claim 20 as dependent upon Claim 4 wherein the means to measure the position of impact (9) comprise an arrangement to compare the accelerations imparted to the two accelerometers (5,6), and to perform an algorithm.

22. A detector according to Claim 20 as dependent upon Claims 8-11 wherein an analyser is provided to analyse signals from different elongate contact sensors (104,105,106) to determine which sensor or combination of sensors is providing a signal, to determine the point of impact.

23. A detector according to Claim 20 as dependent upon Claim 18, wherein the plurality of contact sensor elements (104,105,106) partially overlap each other and an analyser is provided to analyse signals from different pressure tubes to determine which contact sensor elements or combination of contact sensor element is a signal, to determine the position of the point of impact.

24. A detector according to any one of the preceding Claims wherein said at least one parameter includes temperature and wherein at least one temperature sensor (82,111) is provided to sense temperature.

25. A detector according to Claim 24 as dependent on Claim 6 wherein the temperature sensor (82,111) is an analyser to analyse the capacitance across electrodes of the piezo-cable.

26. A detector according to Claim 24 wherein a plurality of temperature sensors are provided.

27. A detector according to Claim 26 as dependent upon Claim 20 wherein the identity of the temperature sensor or temperature sensors providing an output signal used by the evaluator is determined by the means that determine the position of the point of impact.

28. A detector according to any one of the preceding Claims wherein the evaluator is configured additionally to evaluate a signal indicative of vehicle speed before the impact, and to generate the output signal only when the vehicle speed meets at least one criterion.

29. A detector according to Claim 28 wherein the evaluator is configured to generate said output signal only when the vehicle speed is in excess of a first relatively-low threshold and below a second relatively high threshold.

30. A detector according to Claim 29 wherein the first threshold is 20 km per hour and the second threshold is 60 km per hour.

31. A detector according to any one of the preceding Claims when mounted to the chassis of a vehicle, the stiffness of the part of the element between the sensor and the chassis being less than $1/10$ of the total stiffness of the element.

32. A detector according to any one of the preceding Claims configured to receive a signal from a central accelerometer assembly indicative of the total deceleration applied to a vehicle on which the detector is mounted, to inhibit generation of said output signal if the said acceleration fulfils a predetermined criteria.

33. A detector according to any one of the preceding Claims wherein the detector is associated with a pedestrian protection device so that the said output signal will activate the pedestrian protection device.

**Patentansprüche**

1. Aufpralldetektor zur Detektion und Bewertung eines Aufpralls und Erzeugung eines Ausgangssignals, wobei der Detektor mindestens einen Sensor (5, 6, 17, 77, 79) aufweist, um eine von der Art des Aufpralls abhängige Variable zu sensieren, wobei der Sensor (5, 6, 17, 77, 79) auf oder in ein zur Montage auf den Frontteil eines Kraftfahrzeugs (2, 12, 52, 72) angepasstes Element (1, 11, 51, 71) montiert ist wobei das Element einen verformbaren Teil mit einer vorbestimmten Steifigkeit aufweist und so positioniert ist, dass es während eines Aufpralls verformt wird, wobei die Steifigkeit gemäß mindestens einem Parameter variiert, wobei der Detektor eine Anordnung umfasst, die den mindestens einen Parameter misst, sowie einen Bewerter, der die Ausgabe des Sensors (5, 6, 17, 77, 79) in Kombination mit dem Steifigkeitsgrad entsprechend dem mindestens einen Parameter, wie gemessen, bewertet, und ein Ausgangssignal erzeugt, wenn eine vorbestimmte Schwelle überschritten wird.

2. Detektor nach Anspruch 1, bei welchem der Sensor (5, 6, 17, 77, 79) ein Kraftsensor (77) ist.

3. Detektor nach Anspruch 1, bei welchem der Sensor (5, 6, 17, 77, 79) mindestens einen an dem Element (1, 11, 51, 71) montierten Beschleunigungsmesser (5, 6) umfasst, wobei das Element mit nachgebenden Stützen (3, 4) versehen ist, mittels derer es am Frontteil eines Kraftfahrzeugs angebracht werden kann.

4. Detektor nach Anspruch 3, bei welchem der Sensor zwei Beschleunigungsmesser (5, 6) umfasst und bei welchem das Element (1, 11, 51, 71) mit zwei nachgebenden Stützen (3, 4) versehen ist, wobei jeder Beschleunigungsmesser (5, 6) auf oder in oder nahe der jeweiligen Stütze (3, 4) platziert ist.

5. Detektor nach Anspruch 2, bei welchem der Sensor (5, 6, 17, 77, 79) einen länglichen im Element montierten Sensor (17, 77, 79) umfasst, wobei der Sensor so platziert ist, dass wenn der verformbare Teil des Elements verformt wird, eine Kraft auf ihn wirkt.

6. Detektor nach Anspruch 5, bei welchem der Sensor (17) ein piezoelektrisches Kabel ist.

7. Detektor nach Anspruch 6, bei welchem eine Vielzahl von piezoelektrischen Kabeln vorhanden ist.

8. Detektor nach Anspruch 7, bei welchem sich die piezoelektrischen Kabel teilweise überlagern.

9. Detektor nach Anspruch 5, bei welchem der Sensor mindestens ein Druckrohr (57, 58) ist.

10. Detektor nach Anspruch 9, bei welchem eine Vielzahl von Druckrohren (57, 58) vorhanden ist.

11. Detektor nach Anspruch 10, bei welchem sich die Druckrohre teilweise überlagern.

12. Detektor nach einem der Ansprüche 9 bis 11, bei welchem jedes Druckrohr (57, 58) einen ungleichmäßigen Querschnitt besitzt, wobei der vordere Teil des Querschnitts eine wesentliche vertikale Ausdehnung aufweist und der hintere Teil des Querschnitts eine geringere vertikale Ausdehnung aufweist.

13. Detektor nach einem der Ansprüche 9 bis 12, bei welchem jedes Druckrohr (57, 58) mit einer Lüftungsöffnung (62) versehen ist.

14. Detektor nach einem der vorhergehenden Ansprüche, bei welchem der verformbare Teil des Elements aus einem verformbaren Schaummaterial (16, 56) gebildet ist.

15. Detektor nach Anspruch 14 soweit abhängig von einem der Ansprüche 9 bis 13, bei welchem das oder jedes Druckrohr (57, 58) als ein Kanal innerhalb des Schaummaterials (56) ausgebildet ist.

16. Detektor nach Anspruch 14, bei welchem das Element einen im Wesentlichen starren Träger (7, 15, 55, 75) enthält, wobei der Schaumstoff an dem Träger angebracht ist.

17. Detektor nach einem der vorhergehenden Ansprüche, bei welchem das Element (71) mit mindestens einem Kontaktsensor (79) versehen ist, wobei der Detektor eine logische Anordnung aufweist, so dass das Ausgangssignal nur dann erzeugt wird, wenn eine Ausgabe durch den Bewerter bereitgestellt wird und eine Ausgabe von dem Kontaktsensor bereitgestellt wird.

18. Detektor nach Anspruch 17, bei welchem eine Vielzahl von Kontaktsensorelementen (104, 105, 106) bereitgestellt ist, wobei die logische Anordnung so aufgebaut ist, dass das Ausgangssignal erzeugt wird, wenn ein Ausgangssignal durch mindestens eines der Kontaktsensorelemente bereitgestellt wird.

19. Detektor nach einem der vorhergehenden Ansprüche, bei welchem der mindestens eine Parameter die Dicke des verformbaren Teils (8) des Elements (1) umfasst, wobei der verformbare Teil von ungleichmäßiger Dicke ist.

20. Detektor nach Anspruch 19, bei welchem die Anordnung zur Messung dieses mindestens einen Parameters eine Anordnung zur Messung der Position des Aufprallpunktes und zur Bestimmung der Dicke des Elements in Bezug auf die Position des Aufprallpunktes umfasst.

21. Detektor nach Anspruch 20 soweit abhängig von Anspruch 4, bei welchem das Mittel zur Messung der Aufprallposition (9) eine Anordnung zum Vergleich der auf die zwei Beschleunigungsmesser (5, 6) einwirkenden Beschleunigungen sowie zur Ausführung eines Algorithmus umfasst.

22. Detektor nach Anspruch 20 soweit abhängig von den Ansprüchen 8 bis 11, bei welchem ein Analysegerät bereitgestellt wird zur Analyse von verschiedenen länglichen Kontaktsensoren (104, 105, 106), um zu bestimmen, welcher Sensor oder welche Kombination von Sensoren ein Signal bereitstellt, um den Aufprallpunkt zu bestimmen.

23. Detektor nach Anspruch 20 soweit abhängig von Anspruch 18, bei welchem sich die Mehrzahl von Kontaktsensorelementen (104, 105, 106) teilweise überlagern und ein Analysegerät bereitgestellt ist, zur Analyse von Signalen verschiedener Druckrohre, um festzustellen, welche Kontaktsensorelemente oder Kombination von Kontaktsensorelementen ein Signal ist, um die Position des Aufprallpunktes zu bestimmen.

24. Detektor nach einem der vorhergehenden Ansprüche, bei welchem der mindestens eine Parameter die Temperatur umfasst und bei welchem mindestens ein Temperaturfühler (82, 111) bereitgestellt ist, um die Temperatur zu fühlen.

25. Detektor nach Anspruch 24 soweit abhängig von Anspruch 6, bei welchem der Temperaturfühler (82, 111) ein Analysegerät zur Analyse der Kapazität der Elektroden des Piezo-Kabels ist.

26. Detektor nach Anspruch 24, bei welchem eine Vielzahl von Temperaturfühlern bereitgestellt ist.

27. Detektor nach Anspruch 26 soweit abhängig von Anspruch 20, bei welchem die Identität des ein vom Bewerter verwendetes Ausgangssignal bereitstellenden Temperaturfühlers oder der Temperaturfühler durch die Mittel festgelegt ist, die die Position des Aufprallpunktes bestimmen.

28. Detektor nach einem der vorhergehenden Ansprüche, bei welchem der Bewerter zusätzlich dazu konfiguriert ist, ein die Fahrzeuggeschwindigkeit vor dem Aufprall anzeigendes Signal zu bewerten und das Ausgangssignal nur dann zu erzeugen, wenn die Fahrzeuggeschwindigkeit mindestens einem Kriterium entspricht.

29. Detektor nach Anspruch 28, bei welchem der Bewerter dazu konfiguriert ist, das Ausgangssignal nur dann zu erzeugen, wenn die Fahrzeuggeschwindigkeit eine erste relativ niedrige Schwelle überschreitet und unterhalb einer zweiten relativ hohen Schwelle liegt.

30. Detektor nach Anspruch 29, bei welchem die erste Schwelle bei 20 km/h und die zweite Schwelle bei 60 km/h liegt.

31. Detektor nach einem der vorhergehenden Ansprüche bei Montage auf der Karosse eines Fahrzeugs, wobei die Steifigkeit des Teils des Elements zwischen dem Sensor und der Karosse weniger als 1/10 der Gesamtsteifigkeit des Elements beträgt.

32. Detektor nach einem der vorhergehenden Ansprüche, der dazu konfiguriert ist, ein Signal von einer die Gesamtverzögerung eines Fahrzeugs, worauf der Detektor montiert ist, anzeigenden Beschleunigungsmessergruppe zu empfangen, um die Erzeugung des Ausgangssignals zu blockieren, wenn die Beschleunigung ein vorbestimmtes Kriterium erfüllt.

33. Detektor nach einem der vorhergehenden Ansprüche, bei welchem der Detektor mit einer Fußgängerschutzvorrichtung verbunden ist, so dass das Ausgangssignal die Fußgängerschutzvorrichtung aktiviert.

**Revendications**

1. Détecteur d'impact destiné à détecter et à évaluer un impact et à générer un signal de sortie, le détecteur ayant au moins un capteur (5, 6, 17, 77, 79) destiné à détecter une variable qui dépend de la nature d'un impact, le capteur

**EP 1 578 647 B1**

(5, 6, 17, 77, 79) étant monté sur ou dans un élément (1, 11, 51, 71) adapté afin d'être monté sur le devant d'un véhicule à moteur (2, 12, 52, 72), l'élément ayant une partie déformable ayant une rigidité prédéterminée, positionnée afin d'être déformée pendant un impact, la rigidité variant selon au moins un paramètre, le détecteur comprenant un ensemble permettant de mesurer ledit paramètre au moins et un évaluateur destiné à évaluer la sortie du capteur (5, 6, 17, 77, 79) en combinaison avec le degré de rigidité correspondant audit paramètre au moins mesuré, et de générer le signal de sortie lorsqu'un seuil prédéterminé est dépassé.

2. Détecteur selon la revendication 1, dans lequel le capteur (5, 6, 17, 77, 79) est un capteur de force (77).

3. Détecteur selon la revendication 1, dans lequel le capteur (5, 6, 17, 77, 79) comprend au moins un accéléromètre (5, 6) monté sur l'élément (1, 11, 51, 71), l'élément étant muni de supports déformables (3, 4) à l'aide desquels l'élément peut être monté sur le devant d'un véhicule à moteur.

4. Détecteur selon la revendication 3, dans lequel le capteur comprend deux desdits accéléromètres (5, 6), et dans lequel l'élément (1, 11, 51, 71) est muni desdits deux supports déformables (3, 4), chaque accéléromètre (5, 6) étant situé sur ou dans ou de manière adjacente à un support déformable respectif (3, 4).

5. Détecteur selon la revendication 2, dans lequel le capteur (5, 6, 17, 77, 79) comprend un capteur allongé (17, 77, 79) monté dans l'élément, le capteur étant situé afin d'avoir une force exercée dessus lorsque la partie déformable de l'élément est déformée.

6. Détecteur selon la revendication 5, dans lequel le capteur (17) est un câble piézo-électrique.

7. Détecteur selon la revendication 6, dans lequel il existe une pluralité de câbles piézoélectriques.

8. Détecteur selon la revendication 7, dans lequel les câbles piézoélectriques se chevauchent partiellement.

9. Détecteur selon la revendication 5, dans lequel le capteur est au moins un tube à pression (57, 58).

10. Détecteur selon la revendication 9, dans lequel il existe une pluralité de tubes à pression (57, 58).

11. Détecteur selon la revendication 10, dans lequel les tubes à pression se chevauchent partiellement.

12. Détecteur selon l'une quelconque des revendications 9 à 11, dans lequel chaque tube à pression (57, 58) possède une section transversale non uniforme, ayant une partie avant de la section transversale s'étendant sensiblement à la verticale et une partie arrière de la section transversale s'étendant moins à la verticale.

13. Détecteur selon l'une quelconque des revendications 9 à 12, dans lequel chaque tube de pression (57, 58) est muni d'un orifice d'aération (62).

14. Détecteur selon l'une quelconque des revendications précédentes, dans lequel la partie déformable de l'élément est formée d'un matériau en mousse déformable (16, 56).

15. Détecteur selon la revendication 14, lorsqu'elle dépend de l'une quelconque des revendications 9 à 13, dans lequel le ou chaque tube à pression (57, 58) est formé comme un canal dans le matériau de mousse (56).

16. Détecteur selon la revendication 14, dans lequel l'élément comprend un montant sensiblement rigide (7, 15, 55, 75), la mousse étant montée sur le montant.

17. Détecteur selon l'une quelconque des revendications précédentes, dans lequel l'élément (17) est muni d'au moins un capteur de contact (79), le détecteur comprenant un ensemble logique de telle sorte que ledit signal de sortie soit généré uniquement lorsqu'une sortie est fournie par l'évaluateur et qu'une sortie est fournie par ledit capteur de contact.

18. Détecteur selon la revendication 17, dans lequel une pluralité d'éléments de capteurs de contact (104, 105, 106) est prévue, l'ensemble logique étant tel que ledit signal de sortie est généré lorsqu'un signal de sortie est fourni par au moins l'un des éléments de capteurs de contact.

14

**19.** Détecteur selon l'une quelconque des revendications précédentes, dans lequel un paramètre au moins comprend l'épaisseur de la partie déformable (8) de l'élément (1), la partie déformable de l'élément ayant une épaisseur non uniforme.

**20.** Détecteur selon la revendication 19, dans lequel l'ensemble permettant de mesurer ledit paramètre au moins comprend un ensemble permettant de mesurer la position du point d'impact et de déterminer l'épaisseur dudit élément selon la position du point d'impact.

**21.** Détecteur selon la revendication 20, lorsqu'elle dépend de la revendication 4, dans lequel le moyen permettant de mesurer la position de l'impact (9) comprend un ensemble permettant de comparer les accélérations transmises aux deux accéléromètres (5, 6), et d'effectuer un algorithme.

**22.** Détecteur selon la revendication 20, lorsqu'elle dépend des revendications 8 à 11, dans lequel un analyseur est prévu afin d'analyser les signaux provenant de différents capteurs de contact allongés (104, 105, 106) de façon à déterminer quel capteur ou quelle combinaison de capteurs fournit un signal, afin de déterminer le point d'impact.

**23.** Détecteur selon la revendication 20, lorsqu'elle dépend de la revendication 18, dans lequel la pluralité d'éléments de capteurs de contact (104, 105, 106) se chevauchent partiellement et un analyseur est prévu afin d'analyser les signaux provenant de différents tubes de pression de façon à déterminer quels éléments de capteurs de contact ou quelle combinaison d'éléments de capteurs de contact est un signal, afin de déterminer la position du point d'impact.

**24.** Détecteur selon l'une quelconque des revendications précédentes, dans lequel au moins un paramètre comprend la température et dans lequel au moins un capteur de température (82, 111) est prévu afin de détecter la température.

**25.** Détecteur selon la revendication 24, lorsqu'elle dépend de la revendication 6, dans lequel le capteur de température (82, 111) est un analyseur permettant d'analyser la capacitance entre les électrodes du câble piézo.

**26.** Détecteur selon la revendication 24, dans lequel une pluralité de capteurs de température est prévue.

**27.** Détecteur selon la revendication 26, lorsqu'elle dépend de la revendication 20, dans lequel l'identité du capteur de température ou des capteurs de température fournissant un signal de sortie utilisé par l'évaluateur est déterminée par les moyens qui déterminent la position du point d'impact.

**28.** Détecteur selon l'une quelconque des revendications précédentes, dans lequel l'évaluateur est configuré en outre afin d'évaluer un signal indiquant une vitesse du véhicule avant l'impact, et de générer le signal de sortie uniquement lorsque la vitesse du véhicule satisfait au moins un critère.

**29.** Détecteur selon la revendication 28, dans lequel l'évaluateur est configuré afin de générer ledit signal de sortie uniquement lorsque la vitesse du véhicule est supérieure un premier seuil relativement faible et inférieure à un second seuil relativement élevé.

**30.** Détecteur selon la revendication 29, dans lequel le premier seuil est de 20 km/heure et le second seuil est de 60 km/heure.

**31.** Détecteur selon l'une quelconque des revendications précédentes, lorsqu'il est monté sur le châssis d'un véhicule, la rigidité de la partie de l'élément située entre le capteur et le châssis étant inférieure à 1/10 de la rigidité totale de l'élément.

**32.** Détecteur selon l'une quelconque des revendications précédentes, configuré afin de recevoir un signal de la part d'un ensemble d'accéléromètre central indiquant la décélération totale appliquée à un véhicule sur lequel le détecteur est monté, de façon à empêcher la génération dudit signal de sortie si ladite accélération satisfait un critère prédéterminé.

**33.** Détecteur selon l'une quelconque des revendications précédentes, dans lequel le détecteur est associé à un dispositif de protection piétonnier de telle sorte que ledit signal de sortie active le dispositif de protection piétonnier.

FIG 1

FIG 2

FIG 3

FIG 4

FIG 5

FIG 6

FIG 7

FIG 8

FIG 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020033755 A